(19) **Europäisches Patentamt**
**European Patent Office**
**Office européen des brevets**

(11) **EP 4 084 155 A1**

(12) # EUROPEAN PATENT APPLICATION

(43) Date of publication:
**02.11.2022 Bulletin 2022/44**

(21) Application number: **22169458.1**

(22) Date of filing: **22.04.2022**

(51) International Patent Classification (IPC):
*H01M 4/66* *(2006.01)*   *H01M 10/04* *(2006.01)*
*H01M 10/052* *(2010.01)*   *H01M 10/0587* *(2010.01)*

(52) Cooperative Patent Classification (CPC):
**H01M 4/667; H01M 4/668;** H01M 10/0431;
H01M 10/052; H01M 10/0587

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.04.2021 JP 2021074396**

(71) Applicant: **Prime Planet Energy & Solutions, Inc.
Chuo-ku
Tokyo
103-0022 (JP)**

(72) Inventors:
• **SHINDO, Yohei
Tokyo, 103-0022 (JP)**
• **HORIKAWA, Daisuke
Toyota-shi, 471-8571 (JP)**

(74) Representative: **Kuhnen & Wacker
Patent- und Rechtsanwaltsbüro PartG mbB
Prinz-Ludwig-Straße 40A
85354 Freising (DE)**

(54) **ELECTRODE CURRENT COLLECTOR AND SECONDARY BATTERY**

(57)   The present disclosure can improve activation stability of the current cut-off function of the electrode current collector. The electrode current collector 10 disclosed herein includes a sheet-like resin base material 12, and a metal thin film 14 provided on a surface 12a, 12b of the resin base material 12. In the electrode current collector 10 disclosed herein, the surface 12a, 12b of the resin base material 12 in contact with the metal thin films 14 has a surface roughness Rz of 2 μm or more. This can largely improve the adhesion between the resin base material 12 and the metal thin film 14. Thus, when abnormal heat generation occurs, the resin base material 12 is melted and deformed so as to pull the metal thin film 14, thereby breaking the metal thin films 14. As a result, the current cut-off function can be stably activated, and the progression of abnormal heat generation can be substantially prevented, as appropriate.

FIG.1

**Description**

BACKGROUND

1. Technical Field

The present disclosure relates to a current collector and a secondary battery using the electrode current collector.

2. Description of the Related Art

Secondary batteries such as lithium ion secondary batteries are widely used in various products such as vehicles and portable devices. The electrode for such secondary batteries is formed by, for example, applying an electrode active material layer containing an electrode active material on the surface of an electrode current collector. The electrode current collector is a sheet-like electroconductive member. The electrode current collector forms part of an electroconductive path from the electrode active material layer to an electrode terminal.

As the electrode current collector for secondary batteries, an electrode current collector having a lamination structure where the surface of a resin base material is covered with a metal thin film. The electrode current collector having such a lamination structure has a current cut-off function of melting and deforming the resin base material to break the metal thin film when abnormal heat generation occurs due to internal short-circuit (see JP 2004-311146 A). This can contribute to substantial prevention of the progression of abnormal heat generation. Further, other examples of the electrode current collector having a lamination structure are described in JP 2011-222397 A, JPH09-213338 A, JP 2011-134514 A, and JP 2008-171788 A. For example, in JP 2011-222397 A, an electrode current collector including a film base material (resin base material) having high ductility is used. This can substantially prevent the electrode active material layer from falling off due to expansion and contraction during charging and discharging. Further, in JP2011-222397 A, the surface roughness Rz of the surface of the current collector layer (metal thin film) in contact with the film base material (resin base material) is adjusted to 0.05 $\mu$m to 0.1 $\mu$m. This can substantially prevent peeling of the current collector layer (metal thin film).

SUMMARY

However, in a known electrode current collector having a lamination structure, a metal thin film may not be broken even though the resin base material is melted and deformed due to abnormal heat generation. Accordingly, abnormal heat generation may proceed. In other words, the current cut-off function of the known electrode current collector having a lamination structure has room for improvement in terms of activation stability. Thus, in commonly used secondary batteries, measures are taken to prevent abnormal heat generation, such as providing a current cut-off mechanism to an electrode terminal or the like even when the electrode current collector having a lamination structure is used. The measures to prevent abnormal heat generation was the cause of increased costs of components.

The present disclosure was made in view of the problems, and intended to provide a technology that contributes to improvement in activation stability of the current cut-off function of the electrode current collector.

In order to achieve the objective, the present disclosure provides an electrode current collector having the following configuration.

The electrode current collector disclosed herein is an electrode current collector for a secondary battery. The electrode current collector includes a sheet-like resin base material and a metal thin film provided on a surface of the resin base material. In the electrode current collector disclosed herein, the surface of the resin base material in contact with the metal thin film has a surface roughness Rz of 2 $\mu$m or more.

In the electrode current collector disclosed herein, the surface roughness Rz of the resin base material is adjusted in light of appropriate application of stress generated due to melting and deforming of the resin base material at the time when abnormal heat generation occurs, to the metal thin film. Specifically, as described in JP 2011-222397 A, the surface roughness Rz of the contact surface between the metal thin film and the resin base material is sufficiently in the range from 0.05 $\mu$m to 0.1 $\mu$m in light of preventing peeling of the resin base material and the metal thin film. However, the present inventors considered that in order to improve activation stability of the current cut-off function at the time when abnormal heat generation occurs, it is necessary to further increase the adhesion between the resin base material and the metal thin film and appropriately deform the metal thin film in accordance with melting and deforming of the resin base material. In the present disclosure, the surface roughness Rz of the resin base material is adjusted to 2 $\mu$m or more based on the finding. This adjustment causes the resin base material to be melted and deformed so as to pull the metal thm film at the time when abnormal heat generation occurs. As a result, the electrode current collector disclosed herein can improve activation stability of the current cut-off function due to breakage of the metal thin films.

In an aspect of the electrode current collector disclosed herein, the resin base material is made of a resin material having a melting start temperature of 95°C to 300°C. This makes it possible to obtain a resin base material that holds its shape properly during normal charging and discharging, and is melted and deformed easily when abnormal heat generation occurs. Examples of such a resin material include low-density polyethylene, high-density polyethylene, polypropylene, polyolefin, and polyethylene terephthalate.

In an aspect of the electrode current collector disclosed herein, the resin base material has a surface roughness Rz of 15 μm or less. As the surface roughness Rz of the resin base material is reduced, the formation of the metal thin film on the surface of the resin base material tends to become easier.

In an aspect of the electrode current collector disclosed herein, the resin base material has a thickness t1 of 10 μm or more to 40 μm or less. As the film thickness t1 of the resin base material is increased, the amount of deformation of the resin base material at the time when abnormal heat generation occurs becomes larger, which further improves the activation stability of the current cut-off function. The resin base material is not a member that directly acts on the battery performance (battery resistance, energy density, and the like). Thus, if a certain level or more of the activation stability can be ensured, the film thickness t1 of the resin base material is preferably made low.

In an aspect of the electrode current collector disclosed herein, the metal thin film has a film thickness t2 of 2 μm or more. This can improve electroconductivity of the electrode current collector and contribute to the reduction in battery resistance. An increase in the film thickness t2 of the metal thin film may decrease the activation stability of the current cut-off function. Thus, it has been difficult to make the film thickness t2 of the metal thin film be 2 μm or more in the electrode current collector having a known lamination structure. In contrast, the present disclosure can stably activate the current cut-off function even if the film thickness t2 of the metal thin film is 2 μm or more.

In an aspect of the electrode current collector disclosed herein, the surface roughness Rz of the resin base material and the film thickness t2 of the metal thin film satisfy the following equation (1). This can further improve activation stability of the current cut-off function.

$$Rz - t2 \geq -3 \ (1).$$

Another aspect of the present disclosure is directed to a secondary battery including a pair of electrodes consisting of a positive electrode and a negative electrode. In the secondary battery, at least one of the pair of electrodes includes: an electrode current collector; and an electrode active material layer provided on the surface of the electrode current collector. The electrode current collector is the electrode current collector having the above-mentioned configuration. This makes it possible to constitute a secondary battery which can substantially prevent the progression of abnormal heat generation stably at low costs.

BRIEF DESCRIPTION OF THE DRAWINGS

[Fig. 1] Fig. 1 is a schematic cross-sectional view of an electrode current collector according to an embodiment.
[Fig. 2] Fig. 2 is a schematic cross-sectional view of a secondary battery according to an embodiment.
[Fig. 3] Fig. 3 is a schematic cross-sectional view of a configuration of a wound electrode body of a secondary battery according to an embodiment.

DETAILED DESCRIPTION

The following describes an embodiment of the present disclosure with reference to the drawings. The matters necessary for executing the present disclosure (e.g., materials and structures of members except for the electrode current collector), except for matters specifically herein referred to can be grasped as design matters of those skilled in the art based on the related art in the preset field. The present disclosure can be executed based on the contents disclosed herein and the technical knowledge in the present field. In the following drawings which are referred to in the following description, the same members/portions which exhibit the same action are denoted by the same reference numeral. The dimensional relation (such as length, width, or thickness) in each drawing does not reflect the actual dimensional relation.

1. Electrode Current Collector

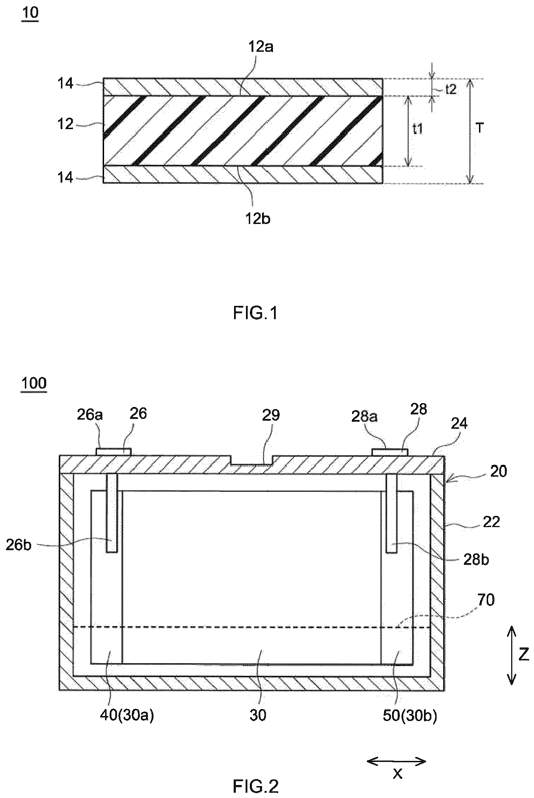

An embodiment of the electrode current collector disclosed herein will be described below with reference to Fig. 1. Fig. 1 is a schematic cross-sectional view of the electrode current collector according to this embodiment.

The electrode current collector 10 illustrated in Fig. 1 is used in an electrode for a secondary battery. As will be described in detail later, electrode active material layers are provided on the respective surfaces of the electrode current collector 10, thereby producing an electrode for a secondary battery. Although the present disclosure is not limited thereto, the total thickness T of the electrode current collector 10 is preferably 5 $\mu$m or more, more preferably 6 $\mu$m or more, particularly preferably 10 $\mu$m or more, in light of the mechanical strength of the electrode current collector 10. On the other hand, when the total thickness T of the electrode current collector 10 is small, the volume of the electrode active material layer can be increased relative to the capacity of the secondary battery, which can contribute to a higher energy density. In light of this fact, the total thickness T of the electrode current collector 10 is preferably 20 $\mu$m or less, more preferably 18 $\mu$m or less, particularly preferably 15 $\mu$m or less. Further, the plane shape of the electrode current collector 10 is not particularly limited, and can be changed, as appropriate, according to the shape of the electrode to be produced. For example, various shapes such as stripe, rectangular, circular, and elliptical shapes can be employed as a plane shape of the electrode current collector 10 without particular limitations.

The electrode current collector 10 according to the present embodiment has a lamination structure where the surfaces of the resin base material 12 are covered with the metal thin films 14. As mentioned above, the electrode current collector 10 having this type of lamination structure has a current cut-off function of melting and deforming the resin base material 12 and thus breaking the metal thin film 14 at the time when abnormal heat generation occurs due to internal short-circuit. The electrode current collector 10 according to the present embodiment is configured to stably activate the current cut-off function, and appropriately prevent the progression of abnormal heat generation. The following describes each layer constituting the electrode current collector 10 in detail.

(1) Resin Base Material

The resin base material 12 is a sheet-like resin member. The resin material constituting the resin base material 12 can be selected from known resin materials, as appropriate, in consideration of the temperature environment of the secondary battery to be used during normal use and during abnormal heat generation. For example, for a lithium ion secondary battery, the temperature environment during normal use may be -10°C to 70°C, and the temperature environment during abnormal heat generation may be 100°C or more. The resin material of the resin base material 12 preferably holds its shape during normal use, and is melted and deformed during abnormal heat generation, in consideration of such temperature environments. In light of more appropriately preventing melting and deforming during normal use, the melting start temperature of the resin material of the resin base material 12 is preferably 90°C or more, more preferably 95°C or more, particularly preferably 100°C or more. In light of more appropriately melting and deforming during abnormal heat generation, the melting start temperature of the resin material of the resin base material 12 is preferably 300°C or less, more preferably 275°C or less, particularly preferably 250°C or less. Examples of the resin material satisfying the melting start temperature include low density polyethylene (the melting start temperature: 95°C to 130°C), high density polyethylene (the melting start temperature: 120°C to 140°C), polypropylene (the melting start temperature: 168°C), polyolefin (the melting start temperature: 120°C to 140°C), and polyethylene terephthalate (the melting start temperature: 265°C).

In the electrode current collector 10 according to the present embodiment, the surface roughness Rz of each of the surfaces 12a, 12b of the resin base material 12 in contact with the metal thin films 14 is set to 2 $\mu$m or more. This allows the metal thin films 14 to be broken when abnormal heat generation occurs, thereby stably activating the current cut-off function of the electrode current collector 10. Specifically, in the electrode current collector 10 according to the present embodiment, the surface roughness Rz of each of the surfaces 12a, 12b of the resin base material 12 is set to 2 $\mu$m or more, thereby largely improving the adhesion between the resin base material 12 and the metal thin films 14. This makes it possible to melt and deform the resin base material 12 so as to pull the metal thin films 14 when abnormal heat generation occurs. Accordingly, the metal thin films 14 are broken to stably activate the current cut-off function.

The larger the surface roughness Rz of the resin base material 12, the higher the adhesion between the resin base material 12 and the metal thin films 14, which tends to improve activation stability of the current cut-off function. In light of this fact, the surface roughness Rz of each of the surfaces 12a, 12b of the resin base material 12 is preferably 2.5 $\mu$m or more, more preferably 3 $\mu$m or more, particularly preferably 3.5 $\mu$m or more. In light of improvement in activation stability of the current cut-off function, the upper limit of the surface roughness Rz of the resin base material 12 is not particularly limited. However, if the surface roughness Rz of each of the surfaces 12a, 12b of the resin base material 12 is reduced, it becomes easier to form metal thin films 14 on the surfaces 12a, 12b of the resin base material 12. In light of this fact, the surface roughness Rz of each of the surfaces 12a, 12b of the resin base material 12 is preferably 15 $\mu$m or less, more preferably 10 $\mu$m or less, particularly preferably 5 $\mu$m or less.

The "surface roughness Rz" herein is "10-point average height" defined in JIS B601, The 10-point average height represents a difference value between the mean value of the heights of the five tallest peaks and the mean of the depths of the five deepest valleys, measured from a line parallel to the average line of the reference length cut from the cross-sectional curve and not crossing the cross-sectional curve, in the direction perpendicular to the average line.

A means for adjusting the surface roughness Rz of the resin base material 12 to be in the above-mentioned range is not particularly limited, and various known surface processing means may be employed. For example, a file or the like is used to make fine scratches on the surfaces 12a and 12b of the resin base material 12, whereby the resin base material 12 having a desired surface roughness Rz can be obtained. The roughing process on the surfaces 12a and 12b of the resin base material 12 is not limited to filing described above, but may also be performed by chemical action using chemicals or the like.

The film thickness t1 of the resin base material 12 is preferably adjusted, as appropriate, inconsideration of the activation stability of the current cut-off function. Specifically, the larger the film thickness t1 of the resin base material 12, the larger the amount of deformation of the resin base material 12 at the time when the abnormal heat generation occurs, which makes is easier to break the metal thin films 14. In light of this fact, the film thickness t1 of the resin base material 12 is preferably 1 $\mu$m or more, more preferably 5 $\mu$m or more, particularly preferably 10 $\mu$m or more. The resin base material 12 does not influence directly on the battery performance (e.g., the battery resistance, the energy density) of the secondary battery. Thus, if a certain level or more of the activation stability is ensured, the film thickness t1 of the resin base material 12 is preferably made low. For example, the film thickness t1 of the resin base material 12 is preferably 50 $\mu$m or less, more preferably 45 $\mu$m or less, particularly preferably 40 $\mu$m or less. This allows the volumes of the metal thin films 14 and the electrode active material layer to be ensured sufficiently. This can contribute to the improvement in the function of the secondary battery.

(2) Metal Thin Film

The metal thin films 14 are thin films provided on the surfaces of the resin base material 12. The metal thin films 14 each contain a metal material having predetermined electroconductivity as a main component. Examples of an electroconductive metal contained in each metal thin film 14 include aluminum, copper, nickel, and titanium. The metal thin film 14 may contain an element other than the electroconductive metal. For example, the metal thin film 14 may be made of an alloy material (such as SUS) containing the above-mentioned electroconductive metal. The metal thin film 14 may contain inevitable impurities generated in the manufacturing processes. Further, the electroconductive metal which is a main component of the metal thin film 14 is preferably changed, as appropriate, according to the electrode to be produced. For example, for a current collector (positive electrode current collector) used in a positive electrode of a lithium ion secondary battery, the metal thin film 14 preferably contains aluminum as a main component. For example, for a current collector (negative electrode current collector) used in a negative electrode of a lithium ion secondary battery, the metal thin film 14 preferably contains copper as a main component.

A means for forming the metal thin films 14 on the respective surfaces of the resin base material 12 is not particularly limited, and known means can be employed without particular limitations. For example, the metal thin films 14 may be formed by vapor deposition of the metal material on the respective surfaces of the resin base material 12 using physical vapor deposition such as a vacuum vapor deposition. Alternatively, the metal thin films 14 may be formed on the respective surfaces of the resin base material 12 also by pressure bonding of metal foil, which has been formed separately, to the respective surfaces of the resin base material 12.

Similarly to the film thickness t1 of the resin base material 12, the film thickness t2 of each of the metal thin films 14 is also preferably adjusted, as appropriate, in consideration of activation stability of the current cut-off function. Specifically, the smaller the film thickness t2 of the metal thin film 14, the easier the metal thin film 14 is broken at the time when the abnormal heat generation occurs, which tends to improve activation stability of the current cut-off function. In light of this fact, the film thickness t2 of each metal thin film 14 is preferably 10 $\mu$m or less, more preferably 7.5 $\mu$m or less, particularly preferably 5 $\mu$m or less. In contrast, in the electrode current collector 10 according to the present embodiment, the resin base material 12 having rough surface is melted and deformed so as to pull the metal thin films 14. Accordingly, the current cut-off function can be sufficiently activated even when the film thickness t2 of each of the metal thin films 14 is made larger than before. Thus, according to the present embodiment, the metal thin films 14 each having a film thickness t2 of 2 $\mu$m or more, which is higher than before, can also be formed to decrease the battery resistance. In the electrode current collector 10 according to the present embodiment, the battery resistance can be reduced by increasing the film thickness t2 of each of the metal thin films 14 to 2.5 $\mu$m or more (more suitably, 3 $\mu$m or more).

As a result of study, the present inventors confirmed that the activation stability of the current cut-off function can be further improved by adjusting the surface roughness Rz of the resin base material 12 and the film thickness t2 of each of the metal thin films 14 so as to satisfy the following equation (1). In light of more suitably improving the activation stability of the current cut-off function, the difference (Rz - t2) between the surface roughness Rz of the resin base material 12 and the film thickness t2 of each of the metal thin films 14 is preferably -2.5 or more, more preferably -2 or more.

$$Rz - t2 \geq -3 \ (1)$$

In light of achieving both of the activation stability of the current cut-off function and the electrode current collector 10 at high level, it is preferred that the above-mentioned equation (1) is satisfied, and the film thickness t2 of each of the metal thin films 14 is set to 2 $\mu$m or more.

(3) Other Embodiments

An embodiment of the electrode current collector disclosed herein was described above. The embodiment is not intended to limit the present disclosure. For example, in the embodiment, the metal thin films 14 are formed on the both surfaces 12a, 12b of the resin base material 12, and the surface roughness Rz of each of the surfaces 12a, 12b is adjusted to 2 $\mu$m or more. However, if the electrode active material layer is provided on only one surface of the electrode current collector, the metal thin film may be formed on only one surface of the resin base material. In this case, the surface of the resin base material in contact with the metal thin film may be subjected to rough surface processing to have a surface roughness Rz of 2 $\mu$m or more. The electrode current collector disclosed herein may include a layer besides the resin base material and the metal thin film. An example of the layer other than the resin base material and the metal thin film can be, a corrosion-resistant layer containing a carbon material as a main component. The corrosion-resistant layer formed on the surface of the metal thin film can substantially prevent corrosion of the metal thin film in contact with the electrode active material layer.

2. Secondary Battery

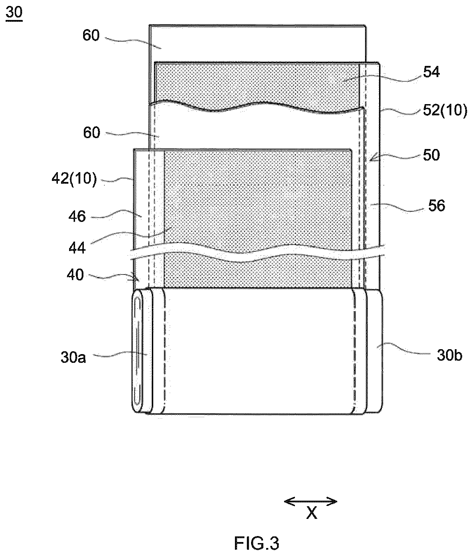

Next, a secondary battery including the electrode current collector 10 according to the above-mentioned embodiment will be described. Fig. 2 is a schematic cross-sectional view of the secondary battery according to this embodiment. Fig. 3 is a schematic cross-sectional view of a configuration of a wound electrode body of a secondary battery according to this embodiment. In Figs. 2 and 3, the reference X indicates the "width direction", and the reference Z indicates the "height direction." Such directions are defined for convenience of explanation and are not intended to limit the installation configuration of the secondary battery described below.

As shown in Fig. 2, the secondary battery 100 according to this embodiment includes a battery case 20 and an electrode body 30. As shown in Fig. 3, the electrode body 30 of the secondary battery 100 includes a pair of electrodes consisting of a positive electrode 40 and a negative electrode 50. In the present embodiment, the electrode current collector 10 according to the embodiment is used in each of current collectors (a positive electrode current collector 42 and a negative electrode current collector 52) of the electrodes. The following describes a specific structure of the secondary battery 100 according to the present embodiment.

(1) Battery Case

The battery case 20 is a container housing an electrode body 30. As shown in Fig. 2, the battery case 20 according to the present embodiment includes a flat, rectangular case body 22 having an opening in its upper surface and a lid 24 closing the opening of the case body 22. The case body 22 and the lid 24 are each made of a metal material such as aluminum. Further, to the lid 24, a positive electrode terminal 26 and a negative electrode terminal 28 are attached. An upper end 26a of the positive electrode terminal 26 is exposed to the outside of the battery case 20, and a lower end 26b of the same is connected to the positive electrode 40 of the electrode body 30 inside the battery case 20. Similarly, an upper end 28a of the negative electrode terminal 28 is exposed to the outside of the battery case 20, and a lower end 28b of the same is connected to a negative electrode 50 of the electrode body 30 inside the battery case 20. The lid 24 is provided with a safety valve 29 for discharging gas generated inside the battery case 20. The battery case 20 according to the present embodiment houses a nonaqueous electrolyte 70 in addition to the electrode body 30. Components of the nonaqueous electrolyte 70 can be those which can be used in commonly used secondary batteries can be used without particular limitations, and do not limit the present disclosure. Thus, the detailed description of the nonaqueous electrolyte 70 is omitted.

The battery case is not particularly limited as long as it can house the electrode body, and may not be a rectangular case made of metal as shown in Fig. 2. The shape of the battery case may be, for example, a circular shape (a cylindrical shape, a coin shape, and a button shape). Further, the material of the battery case may not be a metal material. For example, the secondary battery disclosed herein may be a laminated battery where an electrode body and a nonaqueous electrolyte are encapsulated inside a bag-shaped laminate film.

(2) Electrode body

As shown in Fig. 3, the electrode body 30 includes a long sheet-shaped positive electrode 40, a long sheet-shaped negative electrode 50, and a separator 60. Specifically, the electrode body 30 in the present embodiment is a wound electrode body obtained by winding a laminate obtained by stacking two separators 60 via the positive electrode 40 and the negative electrode 50, in the longitudinal direction.

The positive electrode 40 includes a positive electrode current collector 42, and a positive electrode active material layer 44 provided on each of the surfaces (both surfaces) of the positive electrode current collector 42. As mentioned above, in the present embodiment, the electrode current collector 10 having the above-described configuration (see Fig. 1) is used in the positive electrode current collector 42. The positive electrode active material layer 44 is a layer containing a positive electrode active material as a main component, and is provided on the surface of each of the metal thin films 14 (see Fig. 1) of the electrode current collector 10. The positive electrode active material layer 44 may further contains additives such as a binder and an electroconductive material in addition to the positive electrode active material. Materials contained in the positive electrode active material layer 44 can be those which can be used in commonly used secondary batteries without particular limitations, and do not limit the present disclosure. Thus, the detailed description is omitted. One side edge of the positive electrode 40 in the width direction (the left side edge in Fig. 3) is not provided with the positive electrode active material layer 44, and on the side edge, a positive electrode exposed portion 46 to which the positive electrode current collector 42 is exposing is formed. As shown in Fig. 2, a positive electrode terminal 26 is connected to a positive electrode connection portion 30a which is a wound positive electrode exposed portion 46. Accordingly, an electroconductive path to which the positive electrode terminal 26 and the positive electrode active material layer 44 are electrically connected via the metal thin film of the positive electrode current collector 42 is constructed.

As shown in Fig. 3, the negative electrode 50 includes a negative electrode current collector 52 and a negative electrode active material layer 54 provided on each of the surfaces (both surfaces) of the negative electrode current collector 52. In the present embodiment, the electrode current collector 10 having a configuration shown in Fig. 1 is used also in the negative electrode current collector 52. The negative electrode active material layer 54 is a layer containing a negative electrode active material as a main component, and is provided on the surface of each of the metal thin films 14 (see Fig. 1) of the electrode current collector 10. The negative electrode active material layer 54 may further contain additives such as a binder and a thickener besides the negative electrode active material. Materials contained in the negative electrode active material layer 54 can be those which can be used in commonly used secondary batteries without particular limitations, and do not limit the present disclosure. Thus, the detailed description is omitted. One side edge of the negative electrode 50 in the width direction (the right side edge in Fig. 3) is not provided with a negative electrode active material layer 54, and on the side edge, a negative electrode exposed portion 56 to which the negative electrode current collector 52 is exposing is formed. As shown in Fig. 2, a negative electrode terminal 28 is connected to a negative electrode connection portion 30b which is a wound negative electrode exposed portion 56. Accordingly, an electroconductive path to which the negative electrode terminal 28 and the negative electrode active material layer 54 are electrically connected via the metal thin film of the negative electrode current collector 52 is constructed.

The separator 60 is an insulation sheet placed between the positive electrode 40 and the negative electrode 50. The separator 60 has a porous structure having multiple fine pores. In this secondary battery 100, charge carriers (e.g., lithium ions) move between the positive electrode 40 and the negative electrode 50 via the fine pores of the separator 60, thereby performing charging and discharging. Materials of the separator 60 can be those which can be used in commonly used secondary batteries without particular limitations, and do not limit the present disclosure. Thus, the detailed description is omitted.

In the secondary battery 100 according to the present embodiment, the electrode current collector 10 having the configuration shown in Fig. 1 is used in each of the positive electrode current collector 42 and the negative electrode current collector 52. As mentioned above, the electrode current collector 10 having the configuration shown in Fig. 1 allows appropriate breakage of the metal thin films 14 when abnormal heat generation occurs due to internal short-circuit. This blocks the electroconductive path from the positive electrode active material layer 44 formed via the metal thin film of the positive electrode current collector 42 to the positive electrode terminal 26 (or the electroconductive path from the negative electrode active material layer 54 formed via the metal thin film of the negative electrode current collector 52 to the negative electrode terminal 28), thereby substantially preventing progression of the abnormal heat generation. Thus, according to the present embodiment, the current cut-off mechanism which has many components and may cause an increase in the manufacturing cost is not necessary to be provided in the positive electrode terminal 26 and the negative electrode terminal 28, thereby constructing a highly safe secondary battery at low cost.

The electrode current collector disclosed herein is not limited to be applied to the secondary battery having the above-mentioned structure, and can be applied to secondary batteries having various known structures without particular limitations. For example, the above-mentioned secondary battery 100 is a rectangular battery constructed by housing the wound electrode body 30 in a metal, rectangular battery case 20. However, the electrode current collector disclosed herein may also be applied to a laminated battery. For the laminated battery, a multi-layered electrode body obtained by stacking a plurality (typically, about 80 to 100) of sheet-like positive electrodes and sheet-like negative electrodes via separators is housed inside a laminate film together with a nonaqueous electrolyte. When the electrode current collector disclosed herein is used as the electrode current collector used in the positive electrodes and the negative electrodes of the laminated battery, the progression of the abnormal heat generation can be substantially prevented suitably.

[Test Examples]

Test Examples of the present disclosure will be described below. The Test Examples are not intended to limit the present disclosure.

[First Test]

In this test, three kinds of resin base materials each having a different surface roughness Rz were provided, and metal thin films (copper thin films) were formed on the respective surfaces of each of the resin base materials, thereby producing negative electrode current collectors. Then, secondary batteries using the respective negative electrode current collectors were constructed, and the activation stability of the current cut-off function at the time when heat generates was evaluated.

1. Preparation of Samples

(1) Sample 1

In Sample 1, a sheet-like positive electrode was produced by the following procedures. First, a positive electrode active material (lithium-nickel-cobalt-manganese composite oxide: $LiNi_{0.33}Co_{0.33}Mn_{0.33}O_2$), an electroconductive material (acetylene black: AB), a binder (polyvinylidene fluoride: PVdF), and a solvent (n-methylpyrrolidone: NMP) were mixed to prepare a positive electrode slurry. The mixing ratio (weight ratio) among the positive electrode active material, the electroconductive material, and the binder was set to 85 : 10 : 5. Then, the positive electrode slurry was applied to the surfaces of a positive electrode current collector by the doctor blade method. As the positive electrode current collector in this test, an aluminum foil having a thickness of 15 $\mu$m was used. The positive electrode slurry on the surfaces of the positive electrode current collector was then heated to about 80°C in the air, then held for 10 hours in a vacuum environment at 120°C to perform a drying process, thereby removing the solvent from the positive electrode slurry. Thus, a positive electrode active material layer was formed on the surface of the positive electrode current collector. Thereafter, the resultant was subjected to press processing to pressure-bond the positive electrode active material layer and the positive electrode current collector. Thus, a positive electrode for test (the electrode area: 22 cm$^2$) was produced.
Next, a sheet-like negative electrode was produced by the following procedures. First, a negative electrode active material (graphite) and a binder (PVdF) were mixed to prepare a negative electrode slurry. The mixing ratio (weight ratio) between the negative electrode active material and the binder was set to 95 : 5. Then, the negative electrode slurry was applied to the surfaces of a negative electrode current collector by the doctor blade method. In this test, as the negative electrode current collector, an electrode current collector where a metal thin film (copper thin film) was formed on each of both surfaces of a resin base material (polyethylene terephthalate) was used. In the production of the negative electrode current collector, the surfaces of the resin base material were filed to adjust its surface roughness Rz to 2 $\mu$m. Then, copper was vapor-deposited on the surfaces of the resin base material. Thus, the metal thin film (copper thin film) having a film thickness of 4 $\mu$m was formed. Subsequently, the negative electrode slurry applied on the surfaces of the negative electrode current collector was then heated to about 80°C in the air, held for 10 hours in a vacuum environment at 120°C to perform a drying process, thereby forming a negative electrode active material layer. Thereafter, the resultant was subjected to press processing to pressure-bond the negative electrode active material layer and the negative electrode current collector. Thus, a negative electrode for test (the electrode area: 24 m$^2$) was produced.
Then, the positive electrode and the negative electrode were stacked via two separators and a positive electrode collector foil. Thus, a laminate electrode body was produced. Then, the positive electrode terminal and the negative electrode terminal were connected to the laminate electrode body, and a nonaqueous electrolyte was permeated into the laminate electrode body. Thereafter, the laminate electrode body was encapsulated inside the laminate film. Thus, a laminated battery for test was produced. In the present test, as the nonaqueous electrolyte, used was one obtained by mixing ethylene carbonate (EC) and ethyl methyl carbonate (EMC) at a ratio (volume ratio) of 3 : 7, and dissolving a supporting electrolyte (lithium hexafluorophosphate: $LiPF_6$) at a concentration of 1 mol/dm$^3$ in the mixed solvent.

(2) Sample 2

In Sample 2, a laminated battery for test was produced in the same procedures as in Sample 1 except that the surface roughness Rz of the resin base material of the negative electrode current collector was changed to 0.3 $\mu$m.

(3) Sample 3

In Sample 3, a laminated battery for test was produced in the same procedures as in Sample 1 except that the surfaces of the resin base material of the negative electrode current collector were not subjected to a surface roughening process.

2. Evaluation Test

In this test, abnormal heat generation was caused on the laminated battery of each sample by internal short-circuit, and the activation stability of the current cut-off function of the electrode current collector (negative electrode current collector) was evaluated. Specifically, the battery of each sample was charged with constant current (CC charging) at a rate of 20C up to SOC 100%, then paused for 30 minutes. Then, a needle with a diameter of 0.5 mm was inserted into the center of the battery with the voltage maintained at 4.1 V by performing constant voltage charging (CV charging), causing abnormal heat generation due to an internal short-circuit. Then, a high current resolution logger was used to measure the current flowing at 100 us after the needle was inserted, to check whether or not the current cut-off function of the negative electrode current collector was activated. Table 1 shows the results.

[Table 1]

| | Configuration of Negative Electrode Current Collector | | Current (mA) Flowing at 100 us After Needle was Inserted |
|---|---|---|---|
| | Maximum Surface Roughness Rz ($\mu$m) of Resin Base Material | Film Thickness t2 ($\mu$m) of Copper Thin Film | |
| Sample 1 | 2 | 4 | 62 |
| Sample 2 | 0.3 | 4 | 756 |
| Sample 3 | | 8 | 832 |

As shown in Table 1, only in Sample 1, the current was cut off immediately after abnormal heat generation occurs due to internal short-circuit, and the flowing current dropped significantly. This demonstrates that if the surface roughness Rz of the resin base material is 2 $\mu$m or more, the current cut-off function can be activated more easily when abnormal heat generation occurs. It is assumed that such an effect is obtained because the increase in the surface roughness Rz of the resin base material to improve adhesion between the resin base material and the metal thin films results in melting and deforming of the resin base material to pull the metal thin films, and appropriate breakage of the metal thin films.

[Second Test]

In this test, the surface roughness Rz of the resin base material was fixed at 2 $\mu$m, and five types of negative electrode current collectors with different film thicknesses of the metal thin film were prepared. Then, batteries using the respective negative electrode current collectors were produced, and the battery resistance and the activation stability of the current cut-off function at the time when the abnormal heat generation occurs during normal use of each battery were evaluated.

1. Preparation of Samples

In this test example, four types of laminated batteries (Samples 4 to 7) were prepared under the same conditions as in Sample 1 except that the film thickness of the metal thin film (copper thin film) of the negative electrode current collector was different. In this test, the laminated battery of Sample 1 was also subjected to an evaluation test. Table 2 shows "the surface roughness Rz ($\mu$m) of the resin base material," "the film thickness t2 of the metal thin film," and "the difference (Rz -t2) between the surface roughness Rz of the resin base material and the film thickness t2 of the metal thin film" of Samples 1 and 4 to 7.

2. Evaluation Test

(1) Current Cut-Off Evaluation

Abnormal heat generation was caused on the batteries of the respective samples in accordance with the same procedures as in the first test, and each current flowing at 100 us after the needle was inserted was measured, to check whether or not the current cut-off function of each negative electrode current collector was activated. Table 2 shows the results.

(2) Evaluation of Battery Resistance

In this test, the battery resistance of the laminated battery of each of samples was measured. As a device for measuring the battery resistance, a battery charge/discharge system (manufactured by HOKUTO DENKO CORPORATION, HJ-1001 SM8A) was used. For the measurement conditions, the current value of the first cycle was set to 0.2 mA/cm$^{-2}$, the upper limit of the voltage (counter electrode graphite) was set to 4.1 V, and the temperature was set to 25°C. Then, after calculating the 1C rate from the measured battery capacity, a conditioning process was conducted in which three cycles of charging and discharging at the 1C rate were performed in the range of 2.5 V to 4.1 V (vsLi), and the discharge capacity after the three cycles was used as the initial capacity. Then, each battery was charged up to SOC 60%, then paused for 30 minutes, and discharged at 25°C at three rates including the 1C rate, the 3C rate, and the 5C rate, and the battery resistance was calculated based on the overvoltage after 10 seconds from the start of the discharging. Table 2 shows the results.

[Table 2]

| | | Configuration of Electrode Current Collector | | | Current (mA) Flowing at 100 us After Needle was Inserted | Battery Resistance ($\Omega$) |
|---|---|---|---|---|---|---|
| | | Maximum Surface Roughness Rz ($\mu$m) of Resin Based Material | Film Thickness t2 ($\mu$m) of Copper Thin Film | Rz - t2 ($\mu$m) | | |
| Sample 1 | | 2 | 4 | -2 | 62 | 12.3 |
| Sample 4 | | 2 | 2 | 0 | 56 | 16.7 |
| Sample 5 | | 2 | 0.3 | 1.7 | 25 | 251.0 |
| Sample 6 | | 2 | 5 | -3 | 98 | 12.0 |
| Sample 7 | | 2 | 6 | -4 | 368 | 11.6 |

As can be seen from Table 2, in any of Samples 1 and 4 to 7, the flowing current after the occurrence of the abnormal heat generation was lower than that in Samples 2 and 3 in the first test. Among them, in Samples 1 and 4 to 6, the flowing current after the occurrence of the abnormal heat generation decreases particularly largely. This demonstrates that when Rz - t2 = 3 $\mu$m or more, the activation stability of the current cut-off function of the electrode current collector is further improved. Further, in the evaluation of the battery resistance, it was confirmed that the battery resistance of each of Samples 1, 4, 6, and 7 was significantly reduced. This demonstrated that when the metal thin films (copper thin films) each have a film thickness of 2 $\mu$m or more, the battery resistance was improved.

Although the present disclosure was described in detail above, the embodiment is a mere example, and the present disclosure encompasses various modifications and changes of the specific examples.

**Claims**

1. An electrode current collector (10) for a secondary battery (100), the electrode current collector (10) comprising:

   a sheet-like resin base material (12); and
   a metal thin film (14) provided on a surface (12a, 12b) of the resin base material (12), wherein
   the surface (12a, 12b) of the resin base material (12) in contact with the metal thm film (14) has a surface roughness Rz of 2 $\mu$m or more.

2. The electrode current collector (10) according to claim 1, wherein

the resin base material (12) is made of a resin material having a melting start temperature of 95°C to 300°C.

3. The electrode current collector (10) according to claim 2, wherein
the resin material includes at least one selected from the group consisting of low-density polyethylene, high-density polyethylene, polypropylene, polyolefin, and polyethylene terephthalate.

4. The electrode current collector (10) according to any one of claims 1 to 3, wherein
the resin base material (12) has a surface roughness Rz of 15 $\mu$m or less.

5. The electrode current collector (10) according to any one of claims 1 to 4, wherein
the resin base material (12) has a thickness t1 of 10 $\mu$m or more to 40 $\mu$m or less.

6. The electrode current collector (10) according to any one of claims 1 to 5, wherein
the metal thin film (14) has a film thickness t2 of 2 $\mu$m or more.

7. The electrode current collector (10) according to any one of claims 1 to 6, wherein
the surface roughness Rz of the resin base material (12) and the film thickness t2 of the metal thin film (14) satisfy the following equation (1):

$$Rz - t2 \geq -3 \ (1).$$

8. A secondary battery comprising:

a pair of electrodes consisting of a positive electrode (40) and a negative electrode (50), wherein
at least one of the pair of electrodes comprises:

an electrode current collector (10), and
an electrode active material layer (44, 54) provided on a surface of the electrode current collector (10), and

the electrode current collector (10) is the electrode current collector (10) according to any one of claims 1 to 7.

10

FIG.1

100

FIG.2

FIG.3

Europäisches
Patentamt

European
Patent Office

Office européen
des brevets

# EUROPEAN SEARCH REPORT

Application Number

EP 22 16 9458

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 874 213 A1 (FURUKAWA ELECTRIC CO LTD [JP]; UACJ FOIL CORP [JP]; UACJ CORP [JP]) 20 May 2015 (2015-05-20) * page 3, paragraph 0022 – page 13, paragraph 0078; tables 1-3 * ----- | 1-8 | INV. H01M4/66 ADD. H01M10/04 H01M10/052 H01M10/0587 |
| A,D | JP 2011 222397 A (MITSUBISHI SHINDO KK) 4 November 2011 (2011-11-04) * page 4, paragraph 0017 – page 8, paragraph 0032; figure 1; tables 1-3 * ----- | 1-8 | |

TECHNICAL FIELDS
SEARCHED     (IPC)

H01M

The present search report has been drawn up for all claims

| Place of search | Date of completion of the search | Examiner |
|---|---|---|
| Munich | 22 September 2022 | Polisski, Sergej |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 16 9458

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2022

| Patent document cited in search report | | Publication date | Patent family member(s) | | Publication date |
|---|---|---|---|---|---|
| EP 2874213 | A1 | 20-05-2015 | CN | 104428929 A | 18-03-2015 |
| | | | EP | 2874213 A1 | 20-05-2015 |
| | | | JP | WO2014010681 A1 | 23-06-2016 |
| | | | KR | 20150032335 A | 25-03-2015 |
| | | | TW | 201414069 A | 01-04-2014 |
| | | | US | 2015294802 A1 | 15-10-2015 |
| | | | WO | 2014010681 A1 | 16-01-2014 |
| JP 2011222397 | A | 04-11-2011 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004311146 A
- JP 2011222397 A
- JP H09213338 A
- JP 2011134514 A
- JP 2008171788 A